# EUROPÄISCHE PATENTSCHRIFT

(11) **EP 0 924 242 B1**
(45) Veröffentlichungstag und Bekanntmachung des Hinweises auf die Patenterteilung: **19.06.2002**
(21) Anmeldenummer: 98890369.6
(22) Anmeldetag: 14.12.1998
(51) Int. Cl.: C08J 5/12, C08J 5/04, C08J 5/06, B29D 30/00

(54) **Verfahren zur Verbesserung der Haftung von Kautschukvulkanisaten zu Kupferlegierungen und zu Aluminium bzw. Aluminiumlegierungen**
Process for improving the adhesion of vulcanised rubber to copper alloys and to aluminum or aluminum alloys
Procédé pour améliorer l'adhérence d'un caoutchouc vulcanisé à un alliage de cuivre ou à l'aluminium ou un alliage d'aluminium

(30) Priorität: 17.12.1997 AT 212897
(43) Veröffentlichungstag der Anmeldung: 23.06.1999
(73) Patentinhaber: Hummel, Klaus, Prof. Dipl.-Ing. Dr., 8010 Graz (AT)
(72) Erfinder: Hummel, Klaus Prof.Dipl.-Ing.Dr., 8010 Graz (AT); Filimonov, Andrej Dr., Moskauer Akad.für chem.Fein, 117571 Moskow (RU); Hobisch, Josefine Ing., 8042 Graz (AT); Santos Rodriguez, Francisco J. Dipl.-Chem., 8010 Graz (AT)
(74) Vertreter: Schwarz, Albin, Dr.

(56) Entgegenhaltungen:
- EP-A- 0 276 041
- EP-A- 0 508 212
- DE-A- 2 232 693
- DE-B- 2 022 164
- FR-A- 2 609 934
- GB-A- 1 592 661
- PATENT ABSTRACTS OF JAPAN vol. 006, no. 040 (C-094), 12. März 1982 (1982-03-12) & JP 56 155276 A (TAJIMA OYO KAKO KK), 1. Dezember 1981 (1981-12-01)

## Beschreibung

Die Erfindung betrifft ein Verfahren zur Verbesserung der Haftung von Vulkanisaten aus schwefelhaltigen, leitfähigen, insbesondere rußhaltigen, Kautschukmischungen zu Kupferlegierungen, insbesondere zu Messing oder vermessingten Teilen, und zu Aluminium oder Aluminiumlegierungen oder zu Teilen mit aluminiumhaltiger Beschichtung. Die Erfindung betrifft ferner ein Verfahren zur Herstellung von Artikeln, bestehend aus zumindest einer schwefelhaltigen, leitfähigen, insbesondere rußhaltigen, Kautschukmischung und einem mit dieser in Kontakt tretenden metallischen Teil, welcher aus Messing, Aluminium oder aus einer Aluminiumlegierung besteht oder welcher eine Kontaktfläche aus Messing oder eine aluminiumhaltige Kontaktfläche besitzt. Die Erfindung betrifft ferner Artikel, welche gemäß dem erfindungsgemäßen Verfahren hergestellt sind.

Die Werkstofftechnik ist wesentlich durch Verbundmaterialien mitgeprägt. Beispielsweise werden technische Gummiartikel hergestellt, die metallische Festigkeitsträger wie vermessingten Stahlcord aufweisen. Werkstoffkombinationen aus Gummi und Metallen haben schon vor längerem als sogenannte Schwingmetalle Verwendung gefunden.

Lebensdauer und Funktionstüchtigkeit von technischen Gummiartikeln, wie Fahrzeugreifen, technischen Schläuchen und Fördergurten, die sämtlich in elastomeres Material eingebettete metallische Festigkeitsträger besitzen, sind in beträchtlichem Ausmaß von einer guten Haftung zwischen diesen Festigkeitsträgern und der diese umgebenden vulkanisierten Kautschukmischung abhängig.

Die in solchen Gummiartikeln eingebetteten Festigkeitsträger bestehen im allgemeinen aus vermessingten Stahldrähten, die verschiedene Dimensionen und Konstruktionen haben können. Daneben gibt es eine Vielzahl weiterer Artikel, die aus relativ einfachen Verbunden Gummi-Metall bestehen oder die einen Verbund von Gummi zu metallischen Teilen aufweisen. In jedem Fall ist es jedoch von Bedeutung, daß zwischen dem Gummi und dem metallischen Material bzw. Teil eine dauerhafte Verbindung hergestellt wird.

Das relativ preisgünstige Aluminium hat nicht zuletzt wegen seiner niedrigen Dichte bzw. seines niedrigen spezifischen Gewichts besonderes Interesse für die Verwendung in Verbundmaterialien. Mit vulkanisierenden Kautschukmischungen ergibt sich jedoch eine äußerst geringe Haftung zu Aluminium. Man verwendet sogar Aluminiumformen für die Herstellung geformter Gummiartikel, die nach der Vulkanisation den Formen ohne merkliche Haftung zu entnehmen sind.

Von den oben erwähnten technischen Gummiartikeln her ist es bekannt, daß bei den schwefelhaltigen Kautschukmischungen als Haftvermittler die dünne Messingschicht der Stahldrähte dient, die vor dem technischen Ziehen der Stahldrähte auf diese aufgebracht wird. Die vermessingten Stäbe werden in die unvernetzte Kautschukmischung eingebettet, wobei während der Vulkanisation die Bildung einer Haftschicht erfolgt, die unter anderem aus nichtstöchiometrischen Kupfersulfiden besteht.

Es ist ferner auch üblich, bei technischen Gummiartikeln sogenannte Haftmischungen zu verwenden, denen zusätzlich spezielle Haftvermittlersubstanzen beigemengt sind. Dabei werden nach dem Stand der Technik vorwiegend zwei Haftsysteme eingesetzt, nämlich die sogenannten Cobalt-Systeme und die sogenannten Resorcin-Harz-Systeme, die auch in Kombination miteinander verwendet werden können. Bei den Cobalt-Systemen wird Cobalt in Form organischer Salze verwendet, insbesondere Cobalt-Stearat oder Cobalt-Naphthenat. In solchen Mischungen sind oft höhere Mengen an Schwefel erforderlich, so daß beim Mischen und Verarbeiten eine gewisse Sorgfalt notwendig ist, um Schwefelausblühungen zu vermeiden. Darüber hinaus ist der Einsatz von Cobalt toxikologisch bedenklich, da krebserregende Stoffe freigesetzt werden können.

Auch der Einsatz von Harz-Systemen - wie etwa die Umsetzung von Resorcin-Formaldehyd-Harzen mit Hexamethylentetramin - ist toxikologisch problematisch, da freies Resorcin als gesundheitlich bedenklich und freigesetzter Formaldehyd als krebserregend gilt.

Der Erfindung liegt daher die Aufgabe zugrunde, ein Verfahren zur Verbesserung bzw. Herstellung der Haftung von Vulkanisaten aus schwefel- und rußhaltigen Kautschukmischungen zu Kupferlegierungen, insbesondere zu Messing oder vermessingten Teilen, sowie zu Aluminium, Aluminiumlegierungen oder mit diesen Materialien beschichteten Teilen zu entwickeln, welches ohne jedwede Verwendung von zusätzlichen Haftvermittlersubstanzen auskommt und demnach auch gesundheitlich unbedenklich ist.

Die gestellte Aufgabe wird erfindungsgemäß dadurch gelöst, daß an die Kupferlegierung oder die kupferhaltige Beschichtung bzw. an das Aluminium oder die Aluminiumlegierung oder die aluminiumhaltige Beschichtung während der Vulkanisation der Kautschukmischung eine elektrische Spannung angelegt und im Vulkanisat elektrischer Strom fließen gelassen wird.

Es hat sich überraschenderweise herausgestellt, daß sich die Haftung eines Kautschukvulkanisates zu den vorstehend genannten metallischen Materialien dadurch deutlich erhöhen oder überhaupt erst herstellen läßt, wenn im Vulkanisat während der Dauer der Vulkanisation elektrischer Strom fließt. Im allgemeinen dient der in der Kautschukmischung dispergierte Ruß als elektrisch leitende Substanz. Die üblichen Standardrußtypen können eingesetzt werden; spezielle Leitfähigkeitsruße sind nicht notwendig.

Die Ursache für die verbesserte bzw. entstehende Haftung ist bisher nicht bekannt. Ohne an eine spezifische Theorie gebunden sein zu wollen, scheint sich im Falle von Messing durch die elektrische Spannung im Grenzbereich Messing zur Kautschukmischung eine gegenüber jener Haftschicht, die sich ohne elektrische Spannung ausbildet, veränderte Haftschicht auszubilden, die so zustande kommen dürfte, daß zusätzlich aus der Messingschicht Kupfer in die Kautschukmischung wandert und aus der Kautschukmischung Schwefel in die Messingschicht bzw. an die Oberfläche der Messingschicht gelangt.

Es soll erwähnt werden, daß aus bislang nicht genau geklärter Ursache nicht bei allen Arten von Kautschukmischungen eine deutliche Erhöhung der Haftung feststellbar war, wobei hier insbesondere das gewählte Polymersystem und auch der verwendete Rußtyp eine Rolle spielen dürften. Für das Erzielen einer möglichst optimalen Haftung hat es sich als vorteilhaft herausgestellt, wenn in Vorversuchen eine gewisse Anpassung und Optimierung einzelner Bedingungen vorgenommen wird. Insbesondere kann die optimale Höhe der anzulegenden Spannung, des in der Kautschukmischung fließenden Stromes und der erforderlichen bzw. optimalen Stromdichte von verschiedenen Faktoren, insbesondere der Zusammensetzung der Kautschukmischung, der Anordnung der Elektroden und der sonstigen Ausgestaltung des zu vulkanisierenden Artikels abhängen, so daß zur Erzielung optimaler Ergebnisse eine Anpassung dieser Parameter an die jeweiligen Arbeitsbedingungen erfolgen sollte.

Gemäß dem erfindungsgemäßen Verfahren zur Herstellung von Artikeln bestehend aus zumindest einer schwefelhaltigen, leitfähigen, insbesondere rußhaltigen, Kautschukmischung und einem mit dieser in Kontakt tretenden metallischen Teil, welcher aus Messing, Aluminium oder aus einer Aluminiumlegierung besteht oder welcher eine Kontaktfläche aus Messing oder eine aluminiumhaltige Kontaktfläche besitzt, wird an den Teil bzw. dessen Kontaktfläche während der Vulkanisation eine elektrische Spannung angelegt und im Vulkanisat elektrischer Strom fließen gelassen.

Für eine optimale Ausbildung der Haftung ist es von Vorteil, wenn die elektrische Spannung bereits während des Zuführens von Wärme zur Vulkanisation bzw. bereits während des Einleitens eines Heizmediums angelegt wird, und wenn die elektrische Spannung auf die Dauer der Vulkanisation angelegt bleibt.

Gewisse Bedingungen haben sich als besonders günstig und vorteilhaft für die Herstellung bzw. Verbesserung der Haftung des Kautschukvulkanisates zur metallischen Kontaktfläche erwiesen. So werden besonders gute Ergebnisse erzielt, wenn die angelegte Spannung eine Gleichspannung ist.

Im Falle einer Kupferlegierung oder eines vermessingten Teils ist es besonders vorteilhaft, wenn an die Kupferlegierung bzw. den vermessingten Teil der positive Pol angelegt wird und eine zweite Elektrode durch Anlegen des negativen Pols an einen weiteren leitfähigen Teil gebildet wird.

Im Falle eines aluminiumhaltigen Teils ist es bevorzugt, daß an das Aluminium oder die Aluminiumlegierung oder den mit Aluminium beschichteten Teil der negative Pol angelegt wird und daß eine zweite Elektrode durch Anlegen des positiven Pols an einen weiteren leitfähigen Teil gebildet wird.

Bei aluminiumhaltigen Teilen ist es außerdem vorteilhaft, wenn das Aluminium oder die Aluminiumlegierung oder der mit Aluminium beschichtete Teil vor Anlegen der elektrischen Spannung einer Oberflächenreinigung unterzogen wird. Die Oberflächenreinigung kann z.B. durch Anschmirgeln der Oberfläche des aluminiumhaltigen Teils und/oder Waschen bzw. Behandlung mit verdünnter Salzsäure, wässriger Bichromatlösung oder verdünnter Natronlauge erfolgen. Vorzugsweise wird eine Behandlung mit 3%iger (Gew./Gew.) wässriger NaOH-Lösung über 5 min durchgeführt und anschließend mit Wasser und Aceton gespült. In diesem Fall wird eine besonders gute Haftung zwischen dem aluminiumhaltigen Teil und dem Kautschukvulkanisat erzielt.

Bei einer bevorzugten Ausführungsform der Erfindung wird die zweite Elektrode von einem weiteren, in die Kautschukmischung eingebetteten oder mit dieser in Kontakt tretenden leitfähigen Teil gebildet. Die zweite Elektrode kann vorteilhaft auch das den Artikel umgebende, wärmeübertragende Medium sein.

Eine bevorzugte Ausführungsform der Erfindung ist dadurch gekennzeichnet, daß die zweite Elektrode ein metallischer Teil ist. Beispielsweise kann als zweite Elektrode ein Teil verwendet werden, der aus Aluminium oder einem anderen Metall besteht oder dieses enthält.

Die gemäß dem erfindungsgemäßen Verfahren hergestellten Gummiartikel können technische Gummiartikel, wie Fahrzeugreifen, technische Schläuche, Fördergurte, Keilriemen, elastomerbeschichtete Walzen z.B. für die Papier-, Druckerei- oder Textilindustrie, Elemente zur Schwingungsdämpfung (Elastomerlager) bzw. zur Kraftübertragung, oder Kleinartikel für Schmuckzwecke, Haushaltszwecke oder Spielzwecke sein.

Die vorliegende Erfindung wird nachfolgend anhand von Beispielen näher erläutert. Um die Reproduzierbarkeit des erfindungsgemäßen Verfahrens zu demonstrieren, wurden mit verschiedenen Kautschukmischungen jeweils eine Vielzahl von unter gleichen Bedingungen ablaufenden Versuchen durchgeführt.

### 1. Verbesserung der Haftung von Kautschukvulkanisaten zu einem vermessingten Stahlcorddraht

### Allgemeine Versuchsanordnung

Die Vulkanisation der Kautschukmischung erfolgte in einer zweiteiligen Form aus Aluminium, in deren Innenraum für die Probe ein Kreiszylinder von 24 mm Durchmesser und 5,2 mm Höhe zur Verfügung stand. Die Vulkanisation wurde in einer Heizpresse durchgeführt, wo die beiden Formteile mit einer Schließkraft von 30 kN zusammengepreßt und auf die gewählte Vulkanisationstemperatur von 150°C gebracht wurden.

Die Versuche wurden mit einer Gleichspannungsquelle durchgeführt. Der negative Pol wurde an eine Aluminiumelektrode in Form eines durchbrochenen Ringes, dessen innerer Durchmesser 6 mm betrug, angelegt, die in den Innenraum der zweiteiligen Form eingeführt wurde. Durch diese Aluminiumelektrode war konzentrisch ein vermessingter Stahlcorddraht mit einem Durchmesser von 0,25 mm geführt, der die positive Elektrode bildete. Die Stromzuführungen zu den beiden Elektroden waren gegen die Formteile mit Tefloneinsätzen und gegen die Heizplatten der Heizpresse durch Teflonschläuche elektrisch isoliert.

Die zweiteilige Form wurde mit der Vulkanisationsmischung so gefüllt, daß bei geschlossener Form der Innenraum vollständig aufgefüllt war. Aufgrund der Abmessungen des Innenraumes der verwendeten Vulkanisationsform befand sich der vermessingte Stahlcorddraht jeweils über eine Länge von 5,2 mm in der zu vulkanisierenden Mischung. Die Gleichspannung war während der gesamten Dauer der Vulkanisation an die beiden Elektroden angelegt.

Bei den durchgeführten Versuchen entsprach die Vulkanisationszeit dem zuvor vulkametrisch gemäß DIN 53 529 bestimmten t_{0,9}-Wert.

Die Reißfestigkeit wurde nach folgender Methode bestimmt. Der vulkanisierte Probekörper wurde der Form entnommen. Nach Lagerung von etwa 15 bis 20 Stunden bei Raumtemperatur wurde er zwischen zwei Aluminiumscheiben, die mit Löchern (Durchmesser 1 mm) zur Durchführung des Stahlcorddrahtes versehen waren, eingespannt. Der Stahlcorddraht wurde mit einer Geschwindigkeit von 100 mm/min herausgerissen. Die zum Zeitpunkt des Herausreißens angelegte Kraft ergab sich in N. Aus der Berührungsfläche von 4,08 mm² zwischen Stahlcorddraht und Vulkanisat ergab sich unter der Annahme einer vollständigen Bedeckung die Reißfestigkeit in MPa.

Für die Bildung eines entsprechenden Mittelwertes wurden jeweils 40 Messungen durchgeführt.

### Beispiel 1

Es wurde eine Kautschukmischung folgender Zusammensetzung verwendet:

| | | |
|---|---|---|
| Kautschuk | SBR 1712 | 137,5 |
| Ruß | N 234 | 84,7 |
| Weichmacher | aromatisches Mineralöl | 24,2 |
| Schwefel | S, Pulver (technisch) | 5,5 |
| Beschleuniger | DCBS* | 2,06 |

| | | |
|---|---|---|
| *N,N-Dicyclohexyl-2-benzthiazolsulfenamid | | |

Die Zahlenwerte sind Gewichtsteile. Da ein ölverstreckter Kautschuk (37,5 Teile aromatisches Mineralöl auf 100 Teile Kautschuk) eingesetzt wurde, beziehen sich die weiteren Bestandteile jeweils auf 137,5 Gewichtsteile Kautschuk.

Die Vulkanisationszeit der Mischung (t_{0.9}-Wert) betrug 37 min bei 150°C. Es wurde eine Reihe von Versuchen durchgeführt, bei der jeweils der Probekörper ohne das Anlegen einer elektrischen Spannung vulkanisiert wurde. Bei einer zweiten Reihe von Versuchen wurde an die Elektroden eine elektrische Spannung angelegt.

Für die Versuchsdurchführungen ohne Strom bzw. Spannung ergab sich für die ermittelte Reißfestigkeit ein arithmetischer Mittelwert von 4,3 MPa mit einer Standardabweichung s = 2,62 MPa. Dies entspricht einer schlechten Haftung zwischen Stahlcorddraht und Vulkanisat, der Gummi wurde praktisch vom Stahlcorddraht weggerissen.

Für die Versuchsdurchführungen mit Strom bzw. Spannung wurde an die Elektroden eine Gleichspannung von 6 Volt angelegt. Das Maximum der Stromstärke lag bei etwa 200 mA. Für die nach der oben beschriebenen Methode festgestellte Reißfestigkeit ergab sich aus 40 Messungen ein arithmetischer Mittelwert von 13,74 MPa mit einer Standardabweichung s = 1,63 MPa. Die Haftung zwischen dem Vulkanisat und dem Stahlcorddraht war daher ausgesprochen gut, so daß der Stahlcorddraht vollständig bedeckt blieb.

### Beispiel 2

Die eingesetzte Kautschukmischung entsprach jener gemäß Beispiel 1, mit dem Unterschied, daß anstelle des Rußes N 234 der Ruß N 375 eingesetzt wurde. Die Vulkanisationszeit der mit dieser Mischung erstellten Proben betrug 35 min bei 150°C.

Auch hier wurde eine Reihe von Versuchen ohne das Anlegen einer Spannung an die Elektroden während der Vulkanisation durchgeführt, für die gemessene Reißfestigkeit ergab sich ein arithmetischer Mittelwert von 5,07 MPa mit einer Standardabweichung von s = 1,29 MPa. Wie bei Beispiel 1 war daher nur eine geringe Haftung des Vulkanisates am Stahlcorddraht feststellbar.

Die Versuche mit dem Anlegen einer elektrischen Spannung während der Vulkanisation erfolgten unter elektrischer Gleichspannung von 10 Volt, das Maximum der Stromstärke lag bei etwa 50 mA. Die mit derart vulkanisierten Probekörpern ermittelte Reißfestigkeit, wiederum für 40 Versuchsdurchführungen, ergab einen arithmetischen Mittelwert für die Reißfestigkeit von 9,75 MPa mit einer Standardabweichung von s = 2,64 MPa.

Auch hier ließ sich daher eindrucksvoll die mit dem erfindungsgemäßen Verfahren erzielbare Verbesserung der Haftung feststellen.

Die erläuterten Beispiele 1 und 2 wurden aus einer großen Zahl von durchgeführten Versuchen und Messungen herausgegriffen. In Summe ergab sich aus diesen Untersuchungen, daß sich eine deutliche Verbesserung der Haftung Messing bzw. vermessingter Stahldraht zu Kautschukmischungen vor allem bei Kautschukmischungen bzw. den aus diesen resultierenden Vulkanisaten feststellen läßt, deren Kautschukkomponente bzw. deren Kautschukkomponenten, falls ein Verschnitt unterschiedlicher Kautschuktypen eingesetzt wird, als relativ schlecht haftend (etwa verglichen mit Naturkautschuk) bekannt sind, wie z.B. Styrolbutadienkautschuk.

### 2. Herstellung bzw. Verbesserung der Haftung von Kautschukvulkanisaten zu Aluminium bzw. Aluminiumlegierungen

### Allgemeine Versuchsanordnung

Die Vulkanisation der Kautschukmischung erfolgte in einer zweiteiligen Form aus technischem Aluminium, in deren Innenraum für die Probe ein Kreiszylinder von 24 mm Durchmesser und 4,25 mm Höhe zur Verfügung stand. Die Vulkanisation wurde in einer Heizpresse durchgeführt, wo die beiden Formteile mit einer Schließkraft von 30 kN zusammengepreßt wurden. Die Temperatur im Innern der Probe betrug 150°C.

Die Versuche wurden mit einer Gleichspannungsquelle durchgeführt. Der positive Pol wurde an eine Elektrode A aus technischem Aluminium in Form eines durchbrochenen Ringes, dessen innerer Durchmesser 6 mm und dessen Höhe 4 mm betrug, angelegt. Die Elektrode A war in den Innenraum der zweiteiligen Form eingeführt. Durch die Aluminiumelektrode A war konzentrisch der für die Herstellung einer Haftung bestimmte Stab B aus Aluminium bzw. einer Aluminiumlegierung mit einem Durchmesser von 1,2 mm geführt, der die negative Elektrode bildete. Die Stromzuführungen zu den beiden Elektroden waren gegen die Formteile mit Tefloneinsätzen und gegen die Heizplatten der Heizpresse durch Teflonschläuche elektrisch isoliert.

Die zweiteilige Form wurde mit der Vulkanisationsmischung so gefüllt, daß bei geschlossener Form der Innenraum vollständig aufgefüllt war. Aufgrund der Abmessungen des Innenraumes der verwendeten Vulkanisationsform befand sich Stab B jeweils über eine Länge von 4 mm in der zu vulkanisierenden Mischung. Die Gleichspannung war während der gesamten Dauer der Vulkanisation an die beiden Elektroden angelegt.

Die vulkametrisch gemäß DIN 53 529 bestimmten t_{0.9}-Werte der eingesetzten Vulkanisationsmischungen betrugen 7 bis 8 min bei 150°C. Unter Berücksichtigung der Aufheizzeit für die Vulkanisationsform von etwa 2 min wurde als Vulkanisationszeit 10 min gewählt.

Die Reißfestigkeit wurde nach folgender Methode bestimmt. Der vulkanisierte Probekorper wurde der Form entnommen. Nach Lagerung von etwa 15 bis 20 Stunden bei Raumtemperatur wurde er zwischen zwei Scheiben, die mit Löchern (Durchmesser 2,0 mm) zur Durchführung des Stabes B versehen waren, eingespannt. Der Stab B wurde mit einer Geschwindigkeit von 100 mm/min herausgerissen. Die zum Zeitpunkt des Herausreißens angelegte Kraft ergab sich in N. Aus der Beruhrungsfläche von etwa 16 mm² zwischen Stab B und Vulkanisat ergab sich unter der Annahme einer vollständigen Bedeckung die Reißfestigkeit in MPa.

Für die Bildung eines entsprechenden Mittelwertes wurden ohne angelegte Spannung Messungen an jeweils 27 Proben (Vergleichsproben) durchgeführt. Mit angelegter Spannung wurden Messungen an jeweils 35 Proben durchgeführt.

Bei Durchführung der Versuche zeigte sich, daß die Zerreißfestigkeit von reinem Aluminium in vielen Fällen geringer war als die erfindungsgemäß erzielte Reißfestigkeit der Gummi-Aluminiumhaftung. Daher werden in den nachfolgenden Beispielen nur die Ergebnisse von Versuchen angeführt, bei denen der Stab B aus einer Aluminiumlegierung der folgenden Zusammensetzung bestand: Silicium 5%, Eisen <0,4%, Titan <0,16%, Rest Aluminium. Diese Legierung wird nachstehend mit "AlSi5" bezeichnet.

### Beispiel 3

Es wurde eine Kautschukmischung folgender Zusammensetzung (in Gewichtsteilen) verwendet:

| | | |
|---|---|---|
| Naturkautschuk | NR-RSS3 | 100,0 |
| Ruß | N 115 | 50,0 |
| Weichmacher | naphthenisches Öl | 10,0 |
| Schwefel | S, Pulver (technisch) | 6,4 |
| Beschleuniger | DCBS* | 2,4 |

| | | |
|---|---|---|
| *N,N-Dicyclohexyl-2-benzthiazolsulfenamid | | |

Für die Versuchsdurchführungen ohne Strom bzw. Spannung ergab sich für die ermittelte Reißfestigkeit ein arithmetischer Mittelwert von 1,48 MPa mit einer Standardabweichung s = 0,91 MPa. Dies entspricht einer kaum vorhandenen Haftung zwischen AlSi5-Stab und Vulkanisat.

Für die Versuchsdurchführungen mit Strom bzw. Spannung wurde an die Elektroden eine Gleichspannung von 8 Volt angelegt. Das Maximum der Stromstärke lag meist zwischen 100 und 200 mA. Aus den nach der oben beschriebenen Methode durchgeführten Messungen der Reißfestigkeit ergab sich ein arithmetischer Mittelwert von 7,50 MPa mit einer Standardabweichung s = 1,48 MPa. Die Haftung zwischen dem Vulkanisat und dem AlSi5-Stab war daher wesentlich besser als bei den Vergleichsproben. Bei einigen Proben war die Reißfestigkeit der Haftschicht größer als die des AlSi5-Stabes, der dann zerriß.

### Beispiele 4 bis 6

Die Versuchsdurchführung und die eingesetzte Kautschukmischung entsprach jener gemäß Beispiel 1, mit dem Unterschied, daß der Ruß N 115 durch einen jeweils anderen Ruß ersetzt war. Die eingesetzten Rußtypen sowie die Ergebnisse der Reißfestigkeitsmessungen sind in Tabelle 1 dargestellt.

**Tabelle 1**

| Beispiel | Ruß | Reißfestigkeit ohne Strom (arithmetischer Mittelwert) | Reißfestigkeit mit Strom (arithmetischer Mittelwert) |
|---|---|---|---|
| 4 | N 234 | 1,36 MPa | 5,56 MPa |
| 5 | N 121 | 1,24 MPa | 5,55 MPa |
| 6 | CD 2041 | 1,35 MPa | 6,98 MPa |

Auch hier war bei den Versuchen ohne Anlegen einer Spannung an die Elektroden während der Vulkanisation praktisch keine Haftung des Vulkanisates am AlSi5-Stab feststellbar. Dagegen konnte bei Anlegen einer elektrischen Spannung während der Vulkanisation gemäß dem erfindungsgemäßen Verfahren eine wesentlich verbesserte Haftung erzielt werden.

Wie schon eingangs erwähnt, läßt sich das erfindungsgemäße Verfahren vor allem bei der Herstellung einer Reihe von technischen Gummiartikeln mit metallischen Festigkeitsträgern sowie von Gummikleinteilen mit Gummi/Metall-Kontaktflächen einsetzen. Dabei kann das erfindungsgemäße Verfahren bei der Vulkanisation dieser Artikel, die zum Teil in Vulkanisationsformen und zum Teil in Autoklaven vulkanisiert werden, auf relativ einfache Weise angewendet werden.

Bei der Herstellung des noch unvulkanisierten Gummiartikels können die Festigkeitstrager bzw. metallischen Kontaktflächen bereits untereinander leitend verbunden sein oder auch werden, um über eine einzige Zuleitung die eine Elektrode zu bilden. Die zweite Elektrode kann von weiteren metallischen Festigkeitstragern oder Teilen im Gummiartikel oder auch von der aus beliebigen Metallen gefertigten Vulkanisationsform bzw einem Teil der Form selbst gebildet werden. Es ist selbstverständlich, daß Zuleitungen zu den Elektroden entsprechend elektrisch isoliert werden bzw. daß solche Vorkehrungen dort getroffen werden, wo unerwünschte leitende Verbindungen bestehen.

Für den Fall der Vulkanisation in einem Autoklaven oder bei einer anderen Art der Wärmeübertragung, wie etwa durch eine Salzschmelze (LCM), kann die zweite Elektrode ein leitfähiger, das Produkt umhüllender Teil, z.B. Blei beim Bleimantelverfahren, ein leitfähiges Gewebe, z.B. eine Bandage bei der Herstellung von Schläuchen, eine leitfähige Membran oder das Medium (geschmolzenes Salz) selbst sein.

Besonders einfach ist der Einsatz des erfindungsgemäßen Verfahrens bei der Herstellung der eingangs erwähnten Artikel, die aus einfachen Verbunden Gummi zu Metall bestehen oder solche Verbunde aufweisen. Darunter fallen Gummi-Metall-Verbunde wie Elastomerlager, Schwingungsdämpfer, Schwingungstilger, Federelemente sowie Gummi-Metall-Teile, die in pneumatischen oder hydraulischen Elementen verwendet werden. Nach dem Verfahren können ferner auch Kleinteile und kleine Artikel erzeugt werden, wie beispielsweise Schmuck, Haushaltsartikel und Spielzeug. Gerade bei diesen Artikeln ist es unumgänglich, auf eine gesundheitlich unbedenkliche Herstellung zu achten.

## Patentansprüche

1. Verfahren zur Verbesserung der Haftung von Vulkanisaten aus schwefelhaltigen, leitfähigen, insbesondere rußhaltigen, Kautschukmischungen zu Kupferlegierungen, insbesondere zu Messing oder vermessingten Teilen, und zu Aluminium oder Aluminiumlegierungen oder zu Teilen mit aluminiumhaltiger Beschichtung, **dadurch gekennzeichnet, daß** an die Kupferlegierung oder die kupferhaltige Beschichtung bzw. an das Aluminium oder die Aluminiumlegierung oder die aluminiumhaltige Beschichtung während der Vulkanisation der Kautschukmischung eine elektrische Spannung angelegt und im Vulkanisat elektrischer Strom fließen gelassen wird.

2. Verfahren zur Herstellung von Artikeln bestehend aus zumindest einer schwefelhaltigen, leitfähigen, insbesondere rußhaltigen, Kautschukmischung und einem mit dieser in Kontakt tretenden metallischen Teil, welcher aus Messing, Aluminium oder aus einer Aluminiumlegierung besteht oder welcher eine Kontaktfläche aus Messing oder eine aluminiumhaltige Kontaktfläche besitzt, **dadurch gekennzeichnet, daß** an den Teil bzw. dessen Kontaktfläche während der Vulkanisation eine elektrische Spannung angelegt und im Vulkanisat elektrischer Strom fließen gelassen wird.

3. Verfahren nach Anspruch 1 oder 2, **dadurch gekennzeichnet, daß** die elektrische Spannung bereits während des Zuführens von Wärme zur Vulkanisation bzw. bereits während des Einleitens eines Heizmediums angelegt wird.

4. Verfahren nach einem der Ansprüche 1 bis 3, **dadurch gekennzeichnet, daß** die elektrische Spannung auf die Dauer der Vulkanisation angelegt bleibt.

5. Verfahren nach einem der Ansprüche 1 bis 4, **dadurch gekennzeichnet, daß** die angelegte Spannung eine Gleichspannung ist.

6. Verfahren nach Anspruch 5, **dadurch gekennzeichnet, daß** an die Kupferlegierung bzw. den vermessingten Teil der positive Pol angelegt wird und daß eine zweite Elektrode durch Anlegen des negativen Pols an einen weiteren leitfähigen Teil gebildet wird.

7. Verfahren nach Anspruch 5, **dadurch gekennzeichnet, daß** an das Aluminium oder die Aluminiumlegierung oder den mit Aluminium beschichteten Teil der negative Pol angelegt wird und daß eine zweite Elektrode durch Anlegen des positiven Pols an einen weiteren leitfähigen Teil gebildet wird.

8. Verfahren nach Anspruch 6 oder 7, **dadurch gekennzeichnet, daß** die zweite Elektrode von einem weiteren, in die Kautschukmischung eingebetteten oder mit dieser in Kontakt tretenden leitfähigen Teil gebildet wird.

9. Verfahren nach einem der Ansprüche 6 bis 8, **dadurch gekennzeichnet, daß** die zweite Elektrode das den Artikel umgebende, wärmeübertragende Medium ist.

10. Verfahren nach einem der Ansprüche 6 bis 9, **dadurch gekennzeichnet, daß** die zweite Elektrode ein metallischer Teil ist.

11. Artikel, insbesondere technischer Gummiartikel, hergestellt nach dem Verfahren gemäß einem oder mehreren der Ansprüche 1 bis 10.

12. Gummiartikel nach Anspruch 11, **dadurch gekennzeichnet, daß** er ein Fahrzeugreifen, ein Schlauch, ein Fördergurt, ein Keilriemen, eine elastomerbeschichtete Walze z.B. für die Papier-, Druckerei- oder Textilindustrie, ein Element zur Schwingungsdämpfung (Elastomerlager) bzw. zur Kraftübertragung oder ein Kleinartikel für Schmuckzwecke, Haushaltszwecke oder Spielzwecke ist.

## Claims

1. A method for improving the adhesion of vulcanized materials made of sulphureous, conductive, in particular soot-containing, rubber mixtures, to copper alloys, in particular to brass or brassed parts, and to aluminium or aluminium alloys or to parts having aluminium-containing coatings, **characterized in that**, during vulcanization of the rubber mixture, an electric voltage is applied to the copper alloy or the cupriferous coating or to the aluminium or the aluminium alloy or the aluminium-containing coating, respectively, and an electric current is allowed to flow in the vulcanized material.

2. A method for producing items consisting of at least one sulphureous, conductive, in particular soot-containing, rubber mixture and a metal part contacting the same, consisting of brass, aluminium or an aluminium alloy or having a contact surface of brass or an aluminium-containing contact surface, **characterized in that**, during vulcanization, an electric voltage is applied to the part or its contact surface, respectively, and an electric current is allowed to flow in the vulcanized material.

3. A method according to claim 1 or 2, **characterized in that** the electric voltage is applied already during the supply of heat to the vulcanization process or already during the introduction of a heating medium, respectively.

4. A method according to anyone of claims 1 to 3, **characterized in that** the electric voltage remains applied throughout vulcanization.

5. A method according to anyone of claims 1 to 4, **characterized in that** the applied voltage is a direct voltage.

6. A method according to claim 5, **characterized in that** the positive pole is applied to the copper alloy or the brassed part, respectively, and that a second electrode is formed by applying the negative pole to a further conductive part.

7. A method according to claim 5, **characterized in that** the negative pole is applied to the aluminium or the aluminium alloy or the part coated with aluminium and that a second electrode is formed by applying the positive pole to a further conductive part.

8. A method according to claim 6 or 7, **characterized in that** the second electrode is formed by a further conductive part embedded in the rubber mixture or contacting the same.

9. A method according to anyone of claims 6 to 8, **characterized in that** the second electrode is the heat-transferring medium surrounding the item.

10. A method according to anyone of claims 6 to 9, **characterized in that** the second electrode is a metal part.

11. An item, in particular a technical rubber item, produced in accordance with the method according to one or several of claims 1 to 10.

12. A rubber item according to claim 11, **characterized in that** it is a tire of a vehicle, a hose, a conveyor belt, a V-belt, an elastomer-coated roller, for example, for the paper, printing or textile industries, an element for dampening vibrations (elastomer bearing) and/or transmitting power or a small item for decorating, householding or playing purposes.

## Revendications

1. Procédé pour améliorer l'adhérence de produits de vulcanisation constitués par des mélanges de caoutchoucs contenant du soufre, conducteurs, en particulier contenant du noir de fumée, aux alliages du cuivre, en particulier au laiton ou à des pièces comportant du laiton, et à l'aluminium ou aux alliages d'aluminium ou à des pièces comportant un revêtement contenant de l'aluminium, **caractérisé en ce qu'**une tension électrique est appliquée à l'alliage du cuivre ou au revêtement contenant du cuivre ou à l'aluminium ou à l'alliage d'aluminium ou au revêtement contenant de l'aluminium pendant la vulcanisation du mélange de caoutchoucs, et un courant électrique est amené à circuler dans le produit de vulcanisation.

2. Procédé de production d'articles consistant en au moins un mélange de caoutchoucs contenant du soufre, conducteur, en particulier contenant du noir de fumée, et en une pièce métallique entrant en contact avec celui-ci, qui consiste en laiton, en aluminium ou en un alliage d'aluminium ou qui possède une surface de contact en laiton ou une surface de contact contenant de l'aluminium, **caractérisé en ce qu'**une tension électrique est appliquée à la pièce ou à sa surface de contact pendant la vulcanisation, et un courant électrique est amené à circuler dans le produit de vulcanisation.

3. Procédé selon la revendication 1 ou 2, **caractérisé en ce que** la tension électrique est déjà appliquée pendant l'apport de chaleur pour la vulcanisation ou pendant l'introduction d'un milieu chauffant.

4. Procédé selon l'une des revendications 1 à 3, **caractérisé en ce que** la tension électrique reste appliquée pendant la durée de la vulcanisation.

5. Procédé selon l'une des revendications 1 à 4, **caractérisé en ce que** la tension appliquée est une tension continue.

6. Procédé selon la revendication 5, **caractérisé en ce que** le pôle positif est appliqué à l'alliage du cuivre ou à la pièce comportant du laiton et **en ce qu'**une seconde électrode est formée par application du pôle négatif à une autre pièce conductrice.

7. Procédé selon la revendication 5, **caractérisé en ce que** le pôle négatif est appliqué à l'aluminium ou à l'alliage d'aluminium ou à la pièce recouverte d'aluminium et **en ce qu'**une seconde électrode est formée par application du pôle positif à une autre pièce conductrice.

8. Procédé selon la revendication 6 ou 7, **caractérisé en ce que** la seconde électrode est formée par une autre pièce conductrice incluse dans le mélange de caoutchoucs ou entrant en contact avec celui-ci.

9. Procédé selon l'une des revendications 6 à 8, **caractérisé en ce que** la seconde électrode est le milieu transmettant la chaleur qui entoure l'article.

10. Procédé selon l'une des revendications 6 à 9, **caractérisé en ce que** la seconde électrode est une pièce métallique.

11. Article, en particulier article en caoutchouc technique, produit par le procédé selon une ou plusieurs des revendications 1 à 10.

12. Article en caoutchouc selon la revendication 11, **caractérisé en ce qu'**il s'agit d'un pneumatique de véhicule automobile, d'un tuyau, d'une bande transporteuse, d'une courroie trapézoïdale, d'un cylindre recouvert d'élastomère, par exemple pour l'industrie du papier, de l'impression ou textile, d'un élément pour l'amortissement des oscillations (palier en élastomère) ou pour la transmission de forces ou d'un petit article à des fins de décoration, ménagères ou de jouets.
